# EUROPEAN PATENT SPECIFICATION

(11) **EP 0 990 555 B1**
(45) Date of publication and mention of the grant of the patent: **16.11.2005**
(21) Application number: 99307674.4
(22) Date of filing: 29.09.1999
(51) Int. Cl.: B60N 2/48

(54) **Supporting structure for head rest**
Tragstruktur für Kopfstütze
Structure de support pour appui-tête

(30) Priority: 29.09.1998 JP 27472098
(43) Date of publication of application: 05.04.2000
(73) Proprietor: Piolax Inc., Yokohama-shi, Kanagawa-ken 240-0023 (JP); Toyota Jidosha Kabushiki Kaisha, Toyota-shi, Aichi-ken 471-8571 (JP)
(72) Inventor: Shinozaki, Nobuya, Yokohama-shi, Kanagawa-ken 240-0023 (JP); Nishiyama, Yuji, Toyota-shi, Aichi-ken 471-8571 (JP); Yamada, Masayuki, Toyota-shi, Aichi-ken 471-8571 (JP)
(74) Representative: Abbie, Andrew Kenneth

(56) References cited:
- EP-A- 0 530 474
- US-A- 5 156 440
- US-A- 5 445 434

## Description

### BACKGROUND OF THE INVENTION

### Field of the Invention

The present invention relates to a supporting structure for a head rest to be mounted to a seat back of an automobile. Such a structure according to the preamble of claim 1 is known for instance from US, 5 445 434 A.

### Description of the Related Art

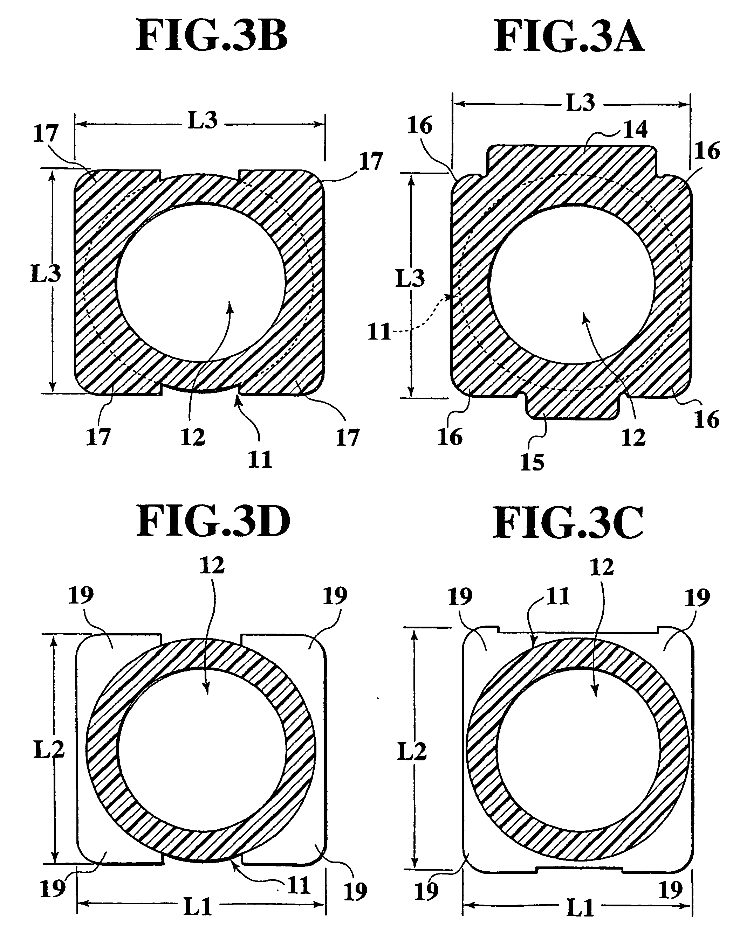

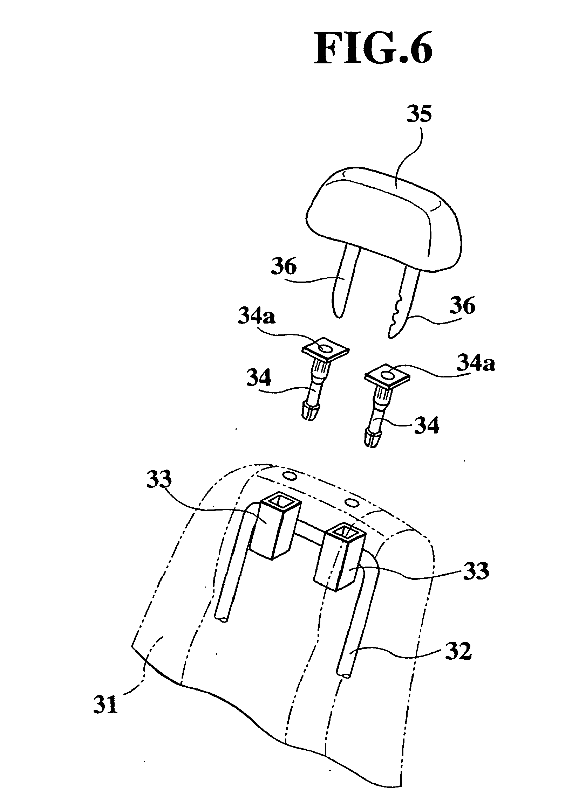

A typical head rest supporting structure usually includes, as shown in Fig. 6, a frame 32 disposed inside a seat back 31, and a pair of brackets 33 made of tubular prism-shaped metallic pipes and fixed to the frame 32, such as by welding, whereas these brackets have fitted therein a pair of support bodies 34 formed with insertion holes 34a, and the insertion holes 34a of the support bodies 34 have slidably fitted therein a pair of stays 36 provided at the end of a head rest 35, so that the head rest 35 is supported on the seat back 31 end (refer to Fig. 3 of Japanese Utility Model JP 06-846551 U).

However, in the conventional supporting structure in which the support bodies 34 are fitted in the brackets 33 to be fixed to the frame 32, it naturally so follows that the brackets 33 have inside dimensions set to be larger than outside dimensions of the support bodies 34, with an apprehension that such as when sliding the head rest 35 to be positioned in level of height, for example, the difference in dimension may unexpectedly cause the support bodies 34 to rattle, giving rise to an uncomfortable feeling along the sliding of head rest 35.

### SUMMARY OF THE INVENTION

The present invention has been developed to provide effective solutions to such points of the conventional supporting structure, and a first embodiment thereof provides a supporting structure for a head rest, comprising a pair of brackets fixed in a seat back and tubular in configuration, a pair of support bodies fitted in the brackets and having insertion holes, and a pair of stays provided at a head rest end and slidably fitted in the insertion holes of the support bodies, wherein a respective support body has on an outside thereof a plurality of flexible vanes extending in perpendicular directions to an axial direction thereof and formed in a spaced manner, the flexible vanes having outside dimensions larger than an inside dimension of an associated bracket.

According to the first embodiment, a respective support body is fitted in an associated bracket fixed in a seat back, and then a corresponding stay of a head rest is to be fitted in an insertion hole of the support body, for the head rest to be supported on the seat back end, whereunder each flexible vane resiliently contacts in a flexibly deforming manner at a distal end edge thereof on an inside of the bracket so that even in cases such as when sliding the head rest to be positioned in level of height, for example, it can be out of apprehension that the support body might unexpectedly rattle in the bracket and give rise to an uncomfortable feeling to the sliding of head rest.

A second embodiment of the invention provides a supporting structure according to the first embodiment, wherein the respective support body has an upper enlarged wall portion and a lower enlarged wall portion provided on the outside in a spaced manner in the axial direction thereof, and flexible vanes formed between the upper and lower enlarged wall portions, and the upper and lower enlarged wall portions have outside dimensions smaller than outside dimensions of these flexible vanes and smaller than the inside dimension of the associated brackets.

According to the second embodiment, in cases such as when a great inclining load is imposed on a support body itself, then upper and lower enlarged wall portions abut on an inside of a bracket and directly receive such a load, giving a reduced burden on flexible vanes, preventing the flexible vanes from yielding.

A third embodiment of the invention provides a supporting structure according to the first or second aspect, wherein the respective support body has a cylindrical tubular configuration, the associated bracket has a prismatic tubular configuration, and the respective support body has flexible vanes formed diagonally thereof, these flexible vanes flexibly contacting at distal end edges thereof on an inside of a corresponding corner portion of the associated bracket.

According to the third embodiment, flexible vanes are permitted to have as longer length dimensions as possible, with the more increased tendencies to flex.

A fourth embodiment of the invention provides a supporting structure according to the first embodiment, including flexible vanes having distal end edges thereof similar in configuration to a cylindrical tubular configuration of the associated bracket, and separation regions provided circumferentially thereof so that the distal end edges of these flexible vanes act independently from each other.

According to the fourth embodiment, distal end edges of flexible vanes act independently from each other to have the more increased tendencies to flex, like the previous aspect.

A fifth embodiment of the invention provides a supporting structure according to any one of the first to the fourth embodiment, including a flexible vane extending in leftward and rightward directions of the seat back, this flexible vane being longer than a flexible vane extending in forward and rearward directions of the seat back.

According to the fifth embodiment, even when a positional deviation is caused somewhat between a pair of brackets and a pair of stays, such a deviation is absorbable with a flexing deformation of a flexible vane elongate in leftward and rightward directions of a seat back.

A sixth embodiment of the invention provides a supporting structure according to the fifth aspect, wherein the pair of brackets are configured either square to be prismatic tubular, and the other rectangular to be prismatic tubular.

According to the sixth embodiment, at least one bracket that has a rectangular prismatic tubular configuration is cooperative with the elongate flexible vane of the fifth aspect for more ensured absorption of positional deviation.

### BRIEF DESCRIPTION OF THE DRAWINGS

The above and further objects and novel features of the present invention will more fully appear from the following detailed description when the same is read in conjunction with the accompanying drawings, in which:
Fig. 1 is a fragmentary exploded perspective view, simply at one side, of a supporting structure for a head rest according to an embodiment of the invention;
Figs. 2A, 2B and 2C are a front view, a side view and a longitudinal sectional view of a support body, respectively;
Figs. 3A, 3B, 3C and 3D are A-A, B-B, C-C and D-D sections of Fig. 2B, respectively;
Figs. 4A and 4B are enlarged longitudinal and cross sectional views respectively of an essential portion with the support body fitted in a bracket;
Fig. 5 is a cross sectional view of a support body according to another embodiment; and
Fig. 6 is an illustration describing a typical supporting structure for a head rest.

### DETAILED DESCRIPTION OF THE EMBODIMENTS

There will be detailed below preferred embodiments of the present invention with reference to the accompanying drawings. Like members are designated by like reference characters.

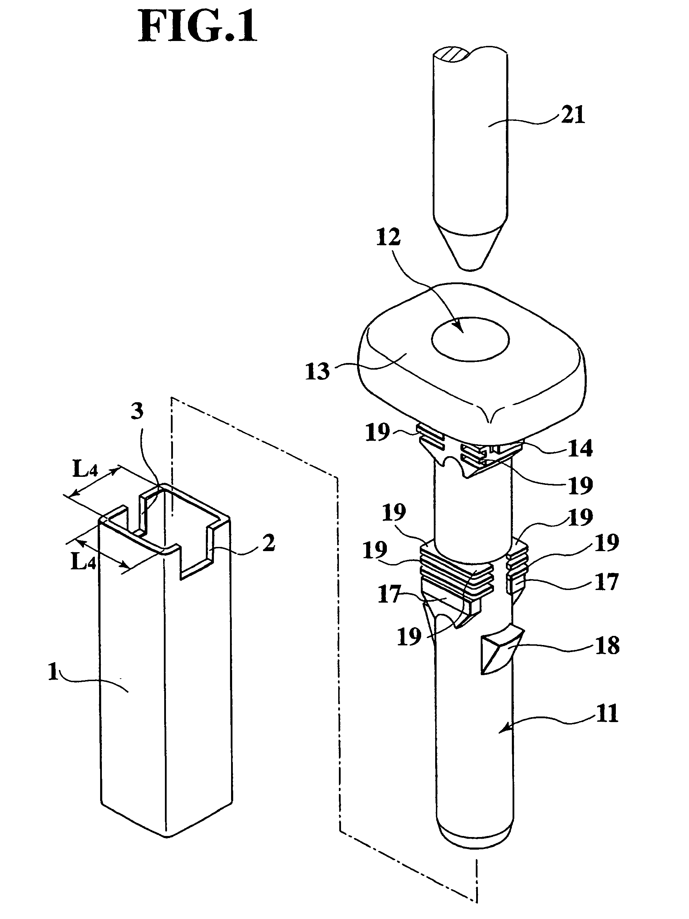

Fig. 1 shows a supporting structure for a head rest according an embodiment of the invention, which also has an arrangement that basically includes a bracket 1 to be fixed in the frame (32) inside the seat back (31), a support body 11 to be fitted in the bracket 1, and a stay 21 provided at the head rest (35) end, to be slidably fitted in an insertion hole 12 of the support body 11, as described, but employs characteristic configurations described below. In the supporting structure, the arrangement is paired, while the figure simply shows one side for convenient comprehension.

Firstly, the bracket 1 is made of a metallic pipe of a square prismatic tubular shape, and formed with grooves 2, 3 cut in opposite upper ends thereof and different in size.

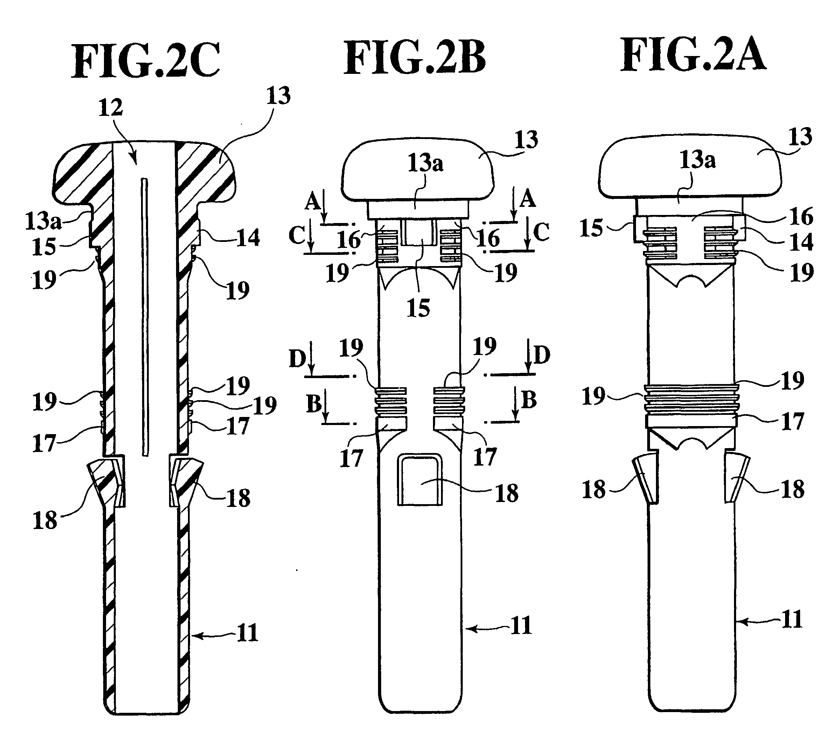

As shown in Figs. 2A to 2C and 3A to 3D as well, the support body 11 is wholly molded with a synthetic resin, in a cylindrical configuration that is formed, along length thereof from a head 13 to an internal total length, with the insertion hole 12 for the stay 21 to be inserted therein, and that has: large and small projections 14, 15 projecting on opposite outside faces right below a base part 13a of the head 13, for engagement with the size-different cut grooves 2, 3 of the bracket 1; four upper enlarged wall portions 16 provided on respective diagonal lines in positions at the same sides therewith, and extending in perpendicular directions to an axial direction thereof; four lower enlarged wall portions 17 provided on respective diagonal lines in positions at interposed sides therebetween, and likewise extending in perpendicular directions to the axial direction; and a pair of engagement lugs 18 provided under the lower enlarged wall portions 17, for resilient locking engagement with a lower end edge of the bracket 1.

In addition, on outside faces vicinal to respective wall sides between the upper enlarged wall portions 16 and the lower enlarged wall portions 17, there are formed a plurality of flexible vanes 19 provided at spacing intervals and likewise extending in perpendicular directions to the axial direction. As well as the upper and lower enlarged wall portions 16, 17, each flexible vane 19 extends, on a diagonal line of the support body 11, in a triangular form over a set of loci similar to a prismatic tubular shape of the bracket 1, with outside dimensions L1, L2 set larger than inside dimensions L4 of the bracket 1, while the upper and lower enlarged wall portions 16, 17 have outside dimensions L3 set smaller than the outside dimensions L1, L2 of the flexible vane 19 and a little smaller than the inside dimensions L4 of the bracket 1.

Therefore, when the support body 11 is fitted in the bracket 1, with the projections 14, 15 directionally coincident to the size-different cut grooves 2, 3, then the pair of engagement lugs 18 lockingly engage with the lower end edge of the bracket 1, and the support body 11 is secured to the bracket 1 end, whereunder the flexible vanes 19 independently resiliently contact at their distal end edges in a flexibly deforming manner on inside surfaces of corresponding upper and lower corner portions of the bracket 1, exhibiting their centering effects for the support body 11 to be centered inside the bracket 1.

As described, the flexible vanes 19 have outside dimensions larger than the inside dimensions L4 of the bracket 1, and particularly in this embodiment, as shown in Figs. 3C and 3D, those flexible vanes 19 that extend in leftward and rightward directions of the seat back have outside dimensions L2 set to be additionally larger than outside dimensions L1 of those flexible vanes 19 that extend in forward and backward directions of the bracket 1. Therefore, even when a positional deviation is somewhat caused between the paired brackets 1 and the paired stays 21, such a deviation can be absorbed by flexing deformations of the flexible vanes 19 extending in the leftward and rightward directions. A respective flexible vane 19, which extends in a triangular form, has a sufficient length for its necessary flexion, in whichever direction it extends.

Also in the supporting structure described, when supporting the head rest (35) on the seat back (31) end, the support body 11 is fitted in the bracket 1 fixed to the frame (32) disposed inside the seat back (31), and then the corresponding stay 21 of the head rest (35) is fitted in the insertion hole 12 of the support body 11, so that the head rest (35) is slidably supported on the seat back (31) end. When the flexible vanes 19 which extend in a triangular form pass inside the bracket 1, their distal end edges freely deform by flexion in an independent manner, facilitating the insertion of the support body 11.

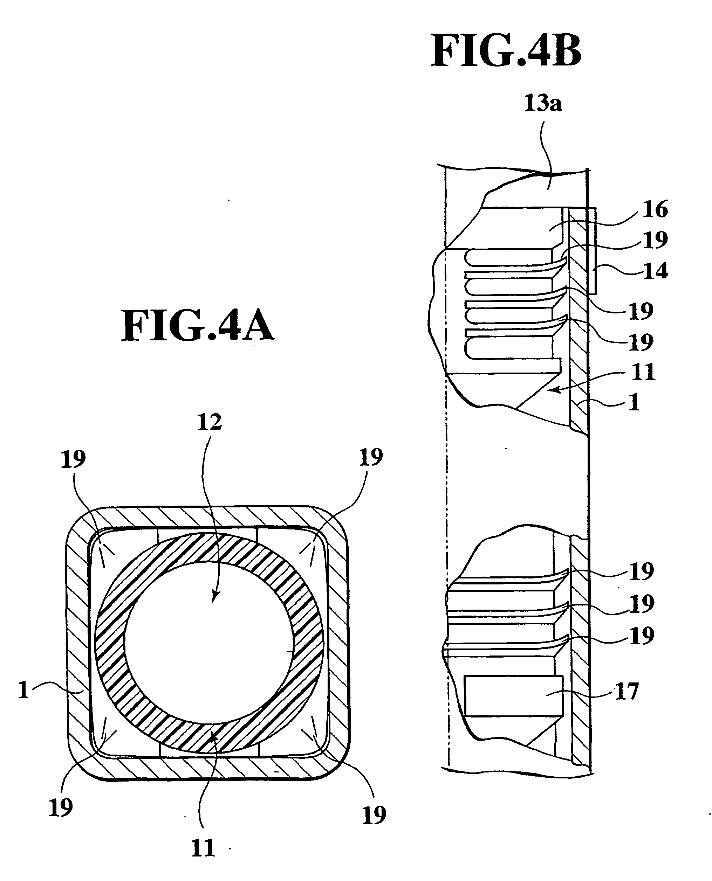

In such a situation, as shown in Figs. 4A and 4B, the flexible vanes 19 resiliently contact in a deforming manner by flexion at their distal end edges on internal surfaces of corresponding upper and lower corner portions of the bracket 1, and even in cases such as when sliding the head rest (35) to be positioned in level of height, it can be out of apprehension that the support body 11 might unexpectedly rattle in the bracket 1 and give rise to an uncomfortable feeling to the sliding of head rest.

Under such a condition, even if a great inclining load is imposed on the support body 11, then the upper and lower enlarged wall portions 16, 17 abut on corresponding corner portions of the bracket 1 and directly receive the inclining load, giving reduced burdens on the flexible vanes 19, effectively preventing them from yielding.

Further, in cases such as when a positional deviation is somewhat caused between the paired brackets 1 and the paired stays 21, the positional deviation can be effectively absorbed by bending forces due to flexion of lengths of the flexible vanes 19 that extend in leftward and rightward directions of the seat back (31) and are set to be dimensionally longer than the flexible vanes 19 that extend in forward and rearward directions the seat back, so that a smooth insertion is ensured of the paired stays 21 to the insertion holes 12 of the support bodies 11, concurrently preventing an unexpected rattling of the support bodies 11, as well.

In the embodiment described, a pair of left and right brackets 1 are likewise configured square to be prismatic tubular. However, either bracket 1 may have a square prismatic tubular form and the other bracket 1 may have a prismatic tubular form elongate to be rectangular in leftward and rightward directions of the seat back (31), and additionally, the flexible vanes 19 extending in leftward and rightward directions of the seat back may have the correspondingly greater lengths, thereby permitting a more effective absorption of a positional deviation between the pair of brackets 1 and a pair of stays 21. In this case also, when removing the head rest (35) from the seat back (31), the support bodies 11 are to be centered inside the brackets 1 by a centering effect of the flexible vanes 19, thereby achieving a similar rattling prevention.

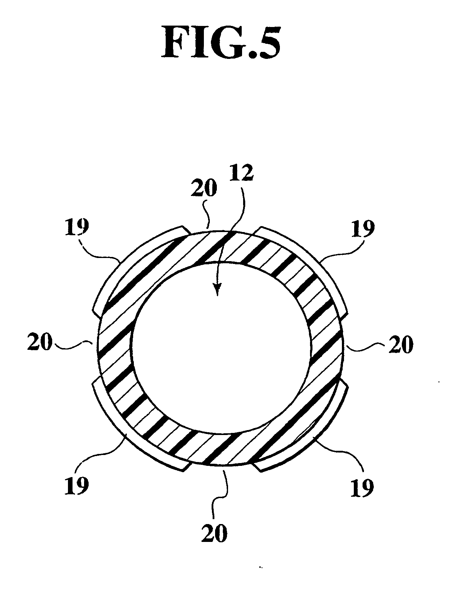

Further, the embodiment in which the concerned bracket 1 has a prismatic tubular form may well be modified therefrom to have a cylindrical tubular bracket 1 as a target of application. In this case, as shown in Fig. 5, flexible vanes 19 formed on a support body 11 may have their distal end edges shaped similar to a cylindrical tubular form of the bracket 1 and formed with a plurality of separation regions 20 along their circumferential directions, allowing for the distal end edges to act independently from each other, with their increased tendencies to flex so that even when they have dimensional errors relative to inside dimensions of the bracket 1, such errors can be effectively absorbed, ultimately preventing a rattling of the support body 11.

While embodiments of the present invention have been described using specific terms, such description is for illustrative purposes, and it is to be understood that changes and variations may be made without departing from the scope of the following claims.

## Claims

1. A supporting structure for a head rest, comprising:
a pair of brackets (1), fixed in a seat back and tubular in configuration;
a pair of support bodies (11) fitted in the brackets and having insertion holes (12); and
a pair of stays (21) provided at a head rest end and slidably fitted in the insertion holes of the support bodies, **characterised in that**
a respective support body (11) has on an outside thereof a plurality of flexible vanes (19) extending in perpendicular directions to an axial direction thereof and formed in a spaced manner, the flexible vanes having outside dimensions larger than an inside dimension of an associated bracket.

2. The supporting structure of claim 1, wherein the respective support body has an upper enlarged wall portion (16) and a lower enlarged wall portion (17) provided on the outside in a spaced manner in the axial direction thereof, and flexible vanes (19) formed between the upper and lower enlarged wall portions, and the upper and lower enlarged wall portions have outside dimensions smaller than outside dimensions of these flexible vanes and smaller than the inside dimension of the associated bracket.

3. The supporting structure of claim 1 or 2, wherein the respective support body (11) has a cylindrical tubular configuration, the associated bracket (1) has a prismatic tubular configuration, and the respective support body has flexible vanes formed diagonally thereof, these flexible vanes flexibly contacting at distal end edges thereof on an inside of a corresponding corner portion of the associated bracket (1).

4. The supporting structure of claim 1, including flexible vanes (19) having distal end edges thereof similar in configuration to a cylindrical tubular configuration of the associated bracket, and separation regions (20), provided circumferentially thereof so that the distal end edges of these flexible vanes act independently from each other.

5. The supporting structure of any one of claims 1 to 4, including a flexible vane extending in leftward and rightward directions of the seat back, this flexible vane being longer than a flexible vane extending in forward and rearward directions of the seat back.

6. The supporting structure of claim 5, wherein the pair of brackets are configured either square to be prismatic tubular, and the other rectangular to be prismatic tubular.

7. Apparatus for supporting a head rest relative to a seat, said apparatus comprising:
a support body (11) for receiving a support stay (21) of a head rest;
a bracket (1) fixable to a seat and shaped internally to define an elongate opening for receiving said support body, **characterised by**
flexible vanes (19) for absorbing lateral movement of said support body relative to said bracket when in use.

## Patentansprüche

1. Tragstruktur für eine Kopfstütze, umfassend:
ein Paar Halterungen (1), die in einer Sitzlehne befestigt sind und eine rohrförmige Konfiguration aufweisen;
ein Paar Tragkörper (11), die in die Halterungen eingefügt sind und Einführungslöcher (12) aufweisen, und
ein Paar Streben (21), die an einem Kopfstützenende vorgesehen sind und gleitbar in die Einführungslöcher der Tragkörper eingefügt sind, **dadurch gekennzeichnet, daß**
ein jeweiliger Tragkörper (11) an einer Außenseite davon mehrere flexible Flügel (19) aufweist, die in senkrecht stehenden Richtungen zu einer axialen Richtung davon verlaufen und in einer räumlich voneinander getrennten Weise ausgebildet sind, wobei die flexiblen Flügel Außenabmessungen aufweisen, die größer als eine Innenabmessung einer zugehörigen Halterung sind.

2. Tragstruktur nach Anspruch 1, wobei der jeweilige Tragkörper einen oberen vergrößerten Wandabschnitt (16) und einen unteren vergrößerten Wandabschnitt (17), die auf der Außenseite in einer räumlich voneinander getrennten Weise in der axialen Richtung davon vorgesehen sind, und flexible Flügel (19) aufweist, die zwischen dem oberen und unteren vergrößerten Wandabschnitt ausgebildet sind, und der obere und untere vergrößerte Wandabschnitt Außenabmessungen aufweisen, die kleiner als Außenabmessungen dieser flexiblen Flügel und kleiner als die Innenabmessung der zugehörigen Halterung sind.

3. Tragstruktur nach Anspruch 1 oder 2, wobei der jeweilige Tragkörper (11) eine zylindrische Rohrkonfiguration aufweist, die zugehörige Halterung (1) eine prismatische Rohrkonfiguration aufweist, und der jeweilige Tragkörper Flügel aufweist, die diagonal davon ausgebildet sind, wobei diese Flügel an distalen Endkanten davon auf einer Innenseite eines entsprechenden Eckabschnitts der zugehörigen Halterung (1) flexibel in Berührung treten.

4. Tragstruktur nach Anspruch 1, enthaltend flexible Flügel (19) mit distalen Endkanten davon, die in der Konfiguration einer zylindrischen Rohrkonfiguration der zugehörigen Halterung ähnlich sind, und Trennbereiche (20), die umfänglich davon vorgesehen sind, so daß die distalen Endkanten dieser flexiblen Flügel unabhängig voneinander wirken.

5. Tragstruktur nach einem der Ansprüche 1 bis 4, enthaltend einen flexiblen Flügel, der nach links und nach rechts von der Sitzlehne verläuft, wobei dieser flexible Flügel länger als ein flexibler Flügel ist, der nach vorne und nach hinten von der Sitzlehne verläuft.

6. Tragstruktur nach Anspruch 5, wobei das Paar Halterungen jeweils quadratisch, um prismatisch rohrförmig zu sein, und die andere rechteckig, um prismatisch rohrförmig zu sein, konfiguriert ist.

7. Vorrichtung zum Tragen einer Kopfstütze bezüglich eines Sitzes, umfassend:
einen Tragkörper (11) zum Aufnehmen einer Tragstrebe (21) einer Kopfstütze;
eine Halterung (1), die an einem Sitz befestigbar ist und innen so geformt ist, daß sie eine verlängerte Öffnung zum Aufnehmen des Tragkörpers definiert, **gekennzeichnet durch**
flexible Flügel (19) zum Auffangen einer seitlichen Bewegung des Tragkörpers bezüglich der Halterung im Gebrauch.

## Revendications

1. Structure de support d'un appuie-tête, comprenant :
une paire de supports (1) fixés dans un dossier de siège et de configuration tubulaire ;
une paire d'éléments de support (11) montés dans les supports et ayant des trous d'insertion (12) ; et
une paire de pattes (21) placées à l'extrémité d'un appuie-tête et montées de manière coulissante dans les trous d'insertion des éléments de support, **caractérisé en ce que**
un élément de support (11) respectif a sur son extérieur une pluralité d'ailettes souples (19) s'étendant dans des directions perpendiculaires à une direction axiale de celui-ci et formées d'une manière espacée, les ailettes souples ayant des dimensions extérieures plus grandes qu'une dimension intérieure d'un support associé.

2. Structure de support selon la revendication 1, dans lequel l'élément de support respectif a une partie de paroi agrandie supérieure (16) et une partie de paroi agrandie inférieure (17) placées sur l'extérieur d'une manière espacée dans la direction axiale de celui-ci, et des ailettes souples (19) formées entre les parties de paroi agrandies supérieure et inférieure, et les parties de paroi agrandies supérieure et inférieure ont des dimensions extérieures plus petites que les dimensions extérieures de ces ailettes souples et plus petites que la dimension intérieure du support associé.

3. Structure de support selon la revendication 1 ou 2, dans lequel l'élément de support (11) respectif a une configuration tubulaire cylindrique, le support associé (1) a une configuration tubulaire prismatique, et l'élément de support respectif a des ailettes souples formées en diagonale de celui-ci, ces ailettes souples entrant en contact élastiquement au niveaux de bords d'extrémité distales de celles-ci sur un intérieur d'une partie de coin correspondant du support associé (1).

4. Structure de support selon la revendication 1, comprenant des ailettes souples (19) ayant des bords d'extrémité distale similaires en configuration à une configuration tubulaire cylindrique du support associé, et des régions de séparation (20), placées circonférentiellement à celles-ci de telle manière que les bords d'extrémité distale de ces ailettes souples agissent indépendamment les uns des autres.

5. Structure de support selon l'une quelconque des revendications 1 à 4, comprenant une ailette souple s'étendant vers la gauche et vers la droite du dossier du siège, cette ailette souple étant plus longue qu'une ailette souple s'étendant vers l'avant et vers l'arrière du dossier du siège.

6. Structure de support selon la revendication 5, dans lequel la paire de supports sont configurés l'un carré pour être tubulaire prismatique, et l'autre rectangulaire pour être tubulaire prismatique.

7. Dispositif de support d'un appuie-tête sur un siège, ledit dispositif comprenant :
un élément de support (11) pour recevoir une patte de support (21) d'un appuie-tête ;
un support (1) pouvant être fixé à un siège et formé intérieurement pour définir une ouverture allongée pour recevoir ledit élément de support, **caractérisé par**
des ailettes souples (19) pour absorber le déplacement latéral dudit élément de support par rapport au dit support en utilisation.
